# EUROPÄISCHE PATENTSCHRIFT

(11) **EP 2 940 219 B1**
(45) Veröffentlichungstag und Bekanntmachung des Hinweises auf die Patenterteilung: **25.12.2019**
(21) Anmeldenummer: 15162981.3
(22) Anmeldetag: 09.04.2015
(51) Int. Cl.: E03C 1/02, F16K 11/044

(54) **BRAUSENVERTEILERANORDNUNG**
SPRINKLER DISTRIBUTOR ASSEMBLY
SYSTÈME D'ARROSAGE

(30) Priorität: 30.04.2014 DE 102014208120
(43) Veröffentlichungstag der Anmeldung: 04.11.2015
(73) Patentinhaber: Hansgrohe SE, 77761 Schiltach (DE)
(72) Erfinder: Erath, Steffen, 78655 Seedorf (DE); Glunk, Günter, 78737 Fluorn-Winzeln (DE); Schmitt, Nico, 78713 Schramberg (DE)
(74) Vertreter: Patentanwälte Ruff, Wilhelm, Beier, Dauster & Partner mbB

(56) Entgegenhaltungen:
- EP-A1- 1 342 854
- GB-A- 1 185 985
- GB-A- 2 480 291
- US-A1- 2013 248 034

## Beschreibung

Die Erfindung bezieht sich auf eine Brausenverteileranordnung mit einem Verteilergehäusekörper mit einer von einer hinteren Stirnseite gebildeten Befestigungs-Rückseite, die für eine wandseitige Befestigung des Verteilergehäusekörpers eingerichtet ist, einer Bedien-Frontseite und drei am Umfang des zylinderförmigen Verteilergehäusekörpers angeordneten Fluidanschlüssen zwischen der Befestigungs-Rückseite und der Bedien-Frontseite, wobei die drei Fluidanschlüsse einen ersten und einen zweiten Fluidauslassanschluss zum Anschluss an eine jeweilige Brausezufuhrleitung und einen Fluideinlassanschluss umfassen, und einem Umschaltventil, das zum wahlweisen Verbinden des Fluideinlassanschlusses mit dem ersten und/oder dem zweiten Fluidauslassanschluss dient und ein nutzerbetätigbares, an der Bedien-Frontseite angeordnetes Bedienelement aufweist. Brausenverteileranordnungen dieser Art werden z.B. in Duschsystemen und Badewannensystemen zur Bereitstellung zweier Fluidauslassanschlüsse für eine Kopfbrause und eine Handbrause installiert, wenn wandseitig nur ein einziger Auslassanschluss vorhanden ist.

Unter der Modellbezeichnung "Showerpipe Croma 220 Reno" bietet die Anmelderin auf dem Markt ein Duschsystem mit einer solchen Brausenverteileranordnung an. Als Bedienelement dient dort ein Drehgriff, über dessen Drehstellung ein Benutzer bestimmen kann, ob ein Duschstrahl über die Kopfbrause, die Handbrause oder beide Brausen gleichzeitig austritt. Der Drehgriff steht an der Bedien-Frontseite aus dem Verteilergehäusekörper nach vorn mehrere Finger breit vor, um ein händisches, umfangsseitiges Ergreifen des Drehgriffs durch den Benutzer zu ermöglichen.

In der Patentschrift GB 1,185,985 ist ein Verteilerventil mit einem scheibenförmigen, rückseitig geschlossenen Gehäuse offenbart, an dem vorne eine bedienbare Drucktaste zur Ventilbetätigung angeordnet ist. Zwischen Vorder- und Rückseite umfasst der Gehäusekörper vier Fluidanschlüsse, von denen zwei sich gegenüberliegende Anschlüsse als Auslässe und zwei sich dazu senkrecht gegenüberliegende Anschlüsse als Einlässe für Kaltwasser- bzw. Warmwasser dienen.

Die Offenlegungsschrift US 2013/0248034 A1 offenbart ein schaltbares sanitäres Verteilerventil mit einem zylinderförmigen Verteilergehäusekörper, der an einer Bedien-Frontseite eine Drucktaste als Bedienelement trägt und an der gegenüberliegenden Rückseite einen Fluideinlassanschluß aufweist. Umfangsseitig führen sich diametral gegenüberliegend vom Verteilergehäusekörper zwei Fluidauslassanschlüsse ab.

Der Erfindung liegt als technisches Problem die Bereitstellung einer Brausenverteileranordnung der eingangs genannten Art zugrunde, welche eine kompakte Bauform bei hohem Bedienkomfort bietet und den oben erwähnten Stand der Technik weiter verbessert.

Die Erfindung löst dieses Problem durch die Bereitstellung einer Brausenverteileranordnung mit den Merkmalen des Anspruchs 1. Bei der erfindungsgemäßen Brausenverteileranordnung ist das Bedienelement eine an der Bedien-Frontseite von vorn bedienbare Drucktaste. Ein Tiefenabstand zwischen einer Bedienelement-Vorderseite und einer Vorderseite eines vordersten der drei Fluidanschlüsse ist kleiner als 50 mm und/oder kleiner als ein Drittel einer Gesamttiefe des Verteilergehäusekörpers mit dem Umschaltventil und/oder kleiner als ein kleinster Durchmesser des Verteilergehäusekörpers senkrecht zu einer sich in Verbindungsrichtung zwischen Bedien-Frontseite und Befestigungs-Rückseite erstreckenden Längsachse des Verteilergehäusekörpers und/oder kleiner als ein kleinster Durchmesser der drei Fluidanschlüsse.

Die erfindungsgemäße Brausenverteileranordnung erlaubt durch die Verwendung der Drucktaste als Bedienelement auf vorteilhafte Weise eine intuitive Betätigung des Umschaltventils durch das bloße Drücken auf die Drucktaste, wobei der Tiefenabstand zwischen der Bedienelement-Vorderseite und der Bedien-Frontseite des Verteilergehäusekörpers bzw. der Vorderseite des vordersten der mindestens drei Fluidanschlüsse klein gehalten werden kann. Somit kann die Brausenverteileranordnung eine kompakte Bauform aufweisen, die dem Benutzer mehr Platz z.B. in einer Duschkabine lässt. Des Weiteren muss nach einem Einbau des Umschaltventils in dem Verteilergehäusekörper die Drucktaste nicht wie z.B. ein Drehgriff radial gegenüber der Längsachse des Verteilergehäusekörpers ausgerichtet werden.

Die Brausenverteileranordnung kann z.B. als Aufputzinstallation mittels der Befestigungs-Rückseite an einer Befestigungsfläche wie einer Duschkabinenwand oder Badezimmerwand befestigt werden. Die drei Fluidanschlüsse sind zwischen der Befestigungs-Rückseite und der Bedien-Frontseite am Umfang des zylinderförmigen Verteilergehäusekörpers angeordnet, d.h. an seiner Mantelfläche, wobei die hintere Stirnseite die Befestigungs-Rückseite ist. Das Umschaltventil ist dann z.B. in den Verteilergehäusekörper vollständig eingesetzt und die Bedienelement-Vorderseite der Drucktaste kann z.B. bündig mit der vorderen Stirnseite des zylinderförmigen Verteilergehäusekörpers abschließen. Die Drucktaste kann insbesondere eine berührungssensitive Touchscreen-Drucktaste oder eine entlang der Längsachse des Verteilergehäusekörpers z.B. von einer vorderen Ausgangsstellung in eine hintere Betätigungsstellung linearbewegliche mechanische Drucktaste sein, welche eine Drückbewegung des Benutzers direkt zu einer Umschaltmechanik des Umschaltventils überträgt.

Das Umschaltventil kann auch zum Absperren des Fluideinlassanschlusses dienen. Der Fluideinlassanschluss kann insbesondere zum Anschluss an einen wandseitigen Zulaufanschluss mittels einer Fluidzufuhrleitung wie z.B. eines flexiblen Fluidzufuhrschlauchs dienen. Der erste und der zweite Fluidauslassanschluss können beispielsweise zum Anschluss einer Handbrause mittels eines flexiblen Handbrausezufuhrschlauches und zum Anschluss einer Kopfbrause mittels eines starren Kopfbrausezufuhrrohres dienen. Die Vorderseite des vordersten der drei Fluidanschlüsse kann die Vorderseite des Fluideinlassanschlusses, des ersten oder des zweiten Fluidauslassanschlusses sein, je nachdem, welcher Fluidanschluss an dem Verteilergehäusekörper am nächsten zur Bedienelement-Vorderseite angeordnet ist. Es versteht sich, dass bei Bedarf einer oder mehrere weitere Fluidanschlüsse für zusätzliche Anschlusszwecke am Verteilergehäusekörper vorgesehen sein können.

Die Gesamttiefe des Verteilergehäusekörpers mit dem Umschaltventil kann z.B. die Tiefe des Verteilergehäusekörpers entlang der Längsachse des Verteilergehäusekörpers zuzüglich der Tiefe eines aus dem Verteilergehäusekörper nach vorn herausragenden Teils des Umschaltventils sein oder auch nur die Tiefe des Verteilergehäusekörpers sein, wenn das Umschaltventil mit der Bedienelement-Vorderseite bündig mit der Bedien-Frontseite abschließt oder gegenüber dieser zurücksteht. Der kleinste Durchmesser des Verteilergehäusekörpers ist die kleinste Ausdehnung des Verteilergehäusekörpers senkrecht zu der Längsachse des Verteilergehäusekörpers. Der kleinste Durchmesser der drei Fluidanschlüsse kann der Durchmesser des Fluideinlassanschlusses, des ersten oder des zweiten Fluidauslassanschlusses sein.

In einer Weiterbildung der Erfindung ist der Tiefenabstand kleiner als 40 mm, insbesondere kleiner als 30 mm, wobei alle Werte bis herunter zu 0 mm möglich sind, d.h. die Bedienelement-Vorderseite und die Vorderseite des vordersten der drei Fluidanschlüsse haben dann keinen Tiefenabstand mehr, sondern liegen in einer gemeinsamen Ebene.

In einer Weiterbildung der Erfindung ist die Gesamttiefe des Verteilergehäusekörpers mit dem Umschaltventil kleiner als 120 mm, insbesondere kleiner als 90 mm, und/oder kleiner als der vierfache kleinste Durchmesser der drei Fluidanschlüsse. Eine solche Brausenverteileranordnung lässt sich sehr kompakt bauen.

In einer Weiterbildung der Erfindung sind zwei der drei Fluidanschlüsse am Umfang des Verteilergehäusekörpers in Umfangsrichtung gegeneinander um 180° versetzt angeordnet. Dies ermöglicht eine kleinere Gesamttiefe des Verteilergehäusekörpers z.B. gegenüber einer Anordnung, bei welcher die drei Fluidanschlüsse entlang der Längsachse des Verteilergehäusekörpers axial nebeneinander am Umfang angeordnet sind. Insbesondere kann der erste Fluidauslassanschluss z.B. zum Anschluss des Handbrausezufuhrschlauches am Umfang des Verteilergehäusekörpers unten angeordnet sein, der zweite Fluidauslassanschluss kann z.B. zum Anschluss des Kopfbrausezufuhrrohres am Umfang oben angeordnet sein und der Fluideinlassanschluss kann z.B. zum Anschluss des Schlauches, der zu dem wandseitigen Auslassanschluss führt, am Umfang unten axial versetzt neben dem ersten Fluidauslassanschluss angeordnet sein.

In einer Weiterbildung der Erfindung ist eine jeweilige Längsachse jedes der drei Fluidanschlüsse senkrecht zur Längsachse des Verteilergehäusekörpers und die Längsachsen der drei Fluidanschlüsse liegen in einer gemeinsamen Ebene. Dies erlaubt eine besonders kleine Gesamttiefe des Verteilergehäusekörpers. Insbesondere können der erste Fluidauslassanschluss und der Fluideinlassanschluss am Umfang unten in einer Ebene senkrecht zu der Längsachse des Verteilergehäusekörpers nebeneinander angeordnet sein. Alternativ dazu ist es z.B. bei einem zylinderförmigen Verteilergehäusekörper möglich, dass die drei Fluidanschlüsse in Umfangsrichtung gegeneinander z.B. jeweils um 120° versetzt an der Mantelfläche des zylinderförmigen Verteilergehäusekörpers angeordnet sind.

Eine vorteilhafte Ausführungsform der Erfindung ist in der einzigen Zeichnung dargestellt und wird nachfolgend beschrieben. Hierbei zeigt:

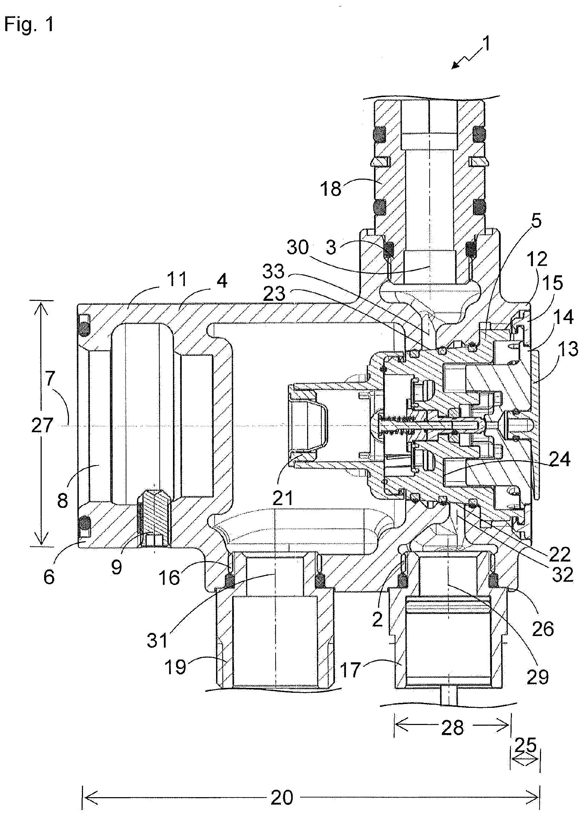

- Fig. 1: eine Längsschnittansicht einer Brausenverteileranordnung.

Eine in der Fig.1 gezeigte Brausenverteileranordnung 1 eignet sich beispielweise zur Bereitstellung eines ersten Fluidauslassanschlusses 2 und eines zweiten Fluidauslassanschlusses 3 für eine nicht gezeigte Kopfbrause bzw. eine nicht gezeigte Handbrause durch Anschließen an einen einzigen wandseitigen Wasserzulaufanschluss. Die Brausenverteileranordnung 1 umfasst einen Verteilergehäusekörper 4 und ein zylinderförmiges Umschaltventil 5.

Der Verteilergehäusekörper 4 weist eine Zylinderform auf. Eine Befestigungs-Rückseite 6, die senkrecht zu einer Längsachse 7 des Verteilergehäusekörper 4 ist, ist von einer hinteren Stirnseite des zylinderförmigen Verteilergehäusekörpers 4 gebildet. Der Verteilergehäusekörper 4 weist einen zur Befestigungs-Rückseite 6 hin offenen Aufnahmeraum 8 zur Aufnahme z.B. eines nicht gezeigten, wandseitigen Befestigungsstutzens auf. Der Befestigungsstutzen wird dort mittels einer Schraube 9 festgelegt, die in den Verteilergehäusekörper 4 am Umfang 11 unten eingeschraubt ist und in den Aufnahmeraum 8 hineinragt. Der Umfang 11 ist von der zur Längsachse 7 parallelen Mantelfläche des zylinderförmigen Verteilergehäusekörpers 4 gebildet.

Das zylinderförmige Umschaltventil 5 ist an einer der Befestigungs-Rückseite 6 gegenüberliegenden, zu der Befestigungs-Rückseite 6 parallelen Bedien-Frontseite 12, die von einer vorderen Stirnseite des zylinderförmigen Verteilergehäusekörpers 4 gebildet ist, in den Verteilergehäusekörper 4 eingeschraubt. Das Umschaltventil 5 sitzt vollständig in dem Verteilergehäusekörper 4 und schließt mit einer kreisrunden Bedienelement-Vorderseite 13 eines nutzerbetätigbaren Bedienelements 14 in Form einer kreisrunden Drucktaste im Wesentlichen bündig mit der Bedien-Frontseite 12 und mit einer ringförmigen Blende 15 ab. Dabei ist die Bedienelement-Vorderseite 13 in die Drucktaste 14 eingeschoben und somit mit ihrer Längsachse in einer beliebigen Winkelstellung in Drehrichtung um die Längsachse 7 einfach ausrichtbar.

Zusätzlich zu dem ersten und zweiten Fluidauslassanschluss 2, 3 weist der Verteilergehäusekörper 4 einen Fluideinlassanschluss 16 auf. In den ersten Fluidauslassanschluss 2, der am Umfang 11 unten am nächsten zu der Bedienelement-Vorderseite 13 angeordnet ist, ist eine Brausezufuhrleitung 17 in Form eines flexiblen Handbrausezufuhrschlauches eingeschraubt, der nach unten von dem Verteilergehäusekörper 4 wegführt. In den zweiten Fluidauslassanschluss 3, der in Umfangsrichtung gegenüber dem ersten Fluideinlassanschluss um 180° versetzt am Umfang 11 oben angeordnet ist, ist eine Brausezufuhrleitung 18 in Form eines starren Kopfbrausezufuhrrohres eingeschraubt, das nach oben zu einer nicht gezeigten Kopfbrause wegführt. In den Fluideinlassanschluss 16, der am Umfang 11 unten axial versetzt neben dem ersten Fluidauslassanschluss 2 angeordnet ist, ist eine Fluidzufuhrleitung 19 in Form eines flexiblen Fluidzufuhrschlauches eingeschraubt, der zu dem nicht gezeigten wandseitigen Wasserzulaufanschluss wegführt. Längsachsen 29, 30, 31 der stutzenförmigen Fluidanschlüsse 2, 3, 16 sind senkrecht zu der Längsachse 7 des Verteilergehäusekörpers 4 und axial entlang dieser parallel zueinander versetzt. Diese Anordnung der Fluidanschlüsse 2, 3, 16 am Umfang 11 ermöglicht eine Gesamttiefe 20 des Verteilergehäusekörpers 4 entlang seiner Längsachse 7 mit dem Umschaltventil 5, die kleiner als 120 mm ist.

Fluid, wie Brausewasser, kann von der Fluidzufuhrleitung 19 durch den Verteilergehäusekörper 4 in Richtung der Bedien-Frontseite 12 zu einem Fluideinlasskanal 21 des Umschaltventils 5 fließen, dessen Längsachse entlang der Längsachse 7 verläuft. Von dort kann das Fluid je nach Stellung eines Ventilschließkörpers des Umschaltventils 5 zu einem ersten und/oder einem zweiten Fluidauslasskanal 22, 23 des Umschaltventils 5 fließen, die radial von der Längsachse 7 wegführen und gegeneinander axial versetzt sind. Der Verteilergehäusekörper 4 weist einen ersten und einen zweiten Ringraum 32, 33 auf, die gegeneinander axial versetzt sind. Der erste Ringraum 32 hat eine Fluidverbindung mit dem ersten Fluidauslasskanal 22 und der zweite Ringraum 33 hat eine Fluidverbindung mit dem zweiten Fluidauslasskanal 23. Unabhängig von einer Einschraubdrehstellung des zylinderförmigen Umschaltventils 5 sind die Fluidverbindungen gewährleistet.

Das Umschaltventil 5 dient zum wahlweisen Verbinden des Fluideinlasskanals 21 und somit des Fluideinlassanschlusses 16 mit dem ersten und/oder dem zweiten Fluidauslasskanal 22, 23 und somit dem ersten und/oder dem zweiten Fluidauslassanschluss 2, 3. Eine Druckbetätigung eines Benutzers wird mittels der mechanischen Drucktaste 14, die entlang der Längsachse 7 des Verteilergehäusekörpers 4 von einer vorderen Ausgangsstellung bis zur Anlage an einer Anschlagfläche 24 in eine hintere Betätigungsstellung linearbeweglich ist, direkt zu einer Umschaltmechanik übertragen. Der Benutzer bestimmt durch die einmalige oder mehrmalige Druckbetätigung der Drucktaste 14, ob ein Duschstrahl über die nicht gezeigte Kopfbrause, die nicht gezeigte Handbrause oder beide Brausen gleichzeitig austritt. Die Verwendung der Drucktaste 14 als Bedienelement erlaubt eine intuitive Betätigung des Umschaltventils 5 durch das bloße Drücken auf die Drucktaste 14. Ein Tiefenabstand 25 zwischen der Bedienelement-Vorderseite 13 und einer Vorderseite 26 des vordersten der drei Fluidanschlüsse 2, 3, 16, d.h. des ersten Fluidauslassanschlusses 2, lässt sich kleiner als 50 mm und kleiner als ein Drittel der Gesamttiefe 20 des Verteilergehäusekörpers 4 mit dem Umschaltventil 5 und kleiner als ein kleinster Durchmesser 27 des Verteilergehäusekörpers 4 senkrecht zu der Längsachse 7 und kleiner als ein kleinster Durchmesser 28 der drei sockelförmigen Fluidanschlüsse, d.h. der Innendurchmesser des ersten Fluidauslassanschlusses 2, halten. Des Weiteren wird dadurch die gezeigte einfache und kompakte Bauform der Brausenverteileranordnung 1 ermöglicht.

In der gezeigten Ausführungsform ist das Bedienelement eine mechanische Drucktaste. Alternativ dazu kann das Bedienelement eine berührungssensitive Touchscreen-Drucktaste sein. Des Weiteren weist die Drucktaste eine kreisrunde Form auf und die Blende eine Ringform. Alternativ dazu, kann die Drucktaste eine quadratische oder eine andere Form aufweisen und die Blende kann entsprechend eine quadratische Rahmenform oder eine entsprechend andere Form aufweisen. Unabhängig davon kann die Bedienelement-Vorderseite eine kreisrunde, quadratische oder andere Form aufweisen. Das gezeigte Umschaltventil dient zum wahlweisen Verbinden des Fluideinlasskanals mit dem ersten und/oder dem zweiten Fluidauslasskanal. Das Umschaltventil kann auch zum Absperren des Fluideinlasskanals und somit des Fluideinlassanschlusses ausgebildet sein.

Des Weiteren ist in dem gezeigten Verteilergehäusekörper das Umschaltventil vollständig eingesetzt, so dass die Bedienelement-Vorderseite der Drucktaste bündig mit der Bedien-Frontseite abschließt. Es ist auch möglich, dass die Bedienelement-Vorderseite gegenüber der Bedien-Frontseite zurücksteht oder das Umschaltventil aus dem Verteilergehäusekörper nach vorn vorsteht, wobei in letzterem Fall dann die Gesamttiefe die Tiefe des Verteilergehäusekörpers entlang seiner Längsachse zuzüglich der Tiefe eines aus dem Verteilergehäusekörper nach vorn hervorstehenden Teils des Umschaltventils ist. Des Weiteren ist es möglich, den Tiefenabstand zwischen der Bedienelement-Vorderseite und der Vorderseite des vordersten der drei Fluidanschlüsse bis auf null zu reduzieren, d.h. die Bedienelement-Vorderseite und die Vorderseite des vordersten der drei Fluidanschlüsse haben dann keinen Tiefenabstand mehr, sondern liegen in einer gemeinsamen Ebene. Die Gesamttiefe des gezeigten Verteilergehäusekörpers ist kleiner als 120 mm. Alternativ dazu kann die Gesamttiefe des Verteilergehäusekörpers mit dem Umschaltventil kleiner als 90 mm und/oder kleiner als der vierfache kleinste Durchmesser der drei Fluidanschlüsse sein.

In der gezeigten Ausführungsform ist die Vorderseite des vordersten der drei Fluidanschlüsse die Vorderseite des ersten Fluidauslassanschlusses. Der vorderste Fluidanschluss mit der vordersten Vorderseite kann auch der zweite Fluidauslassanschluss oder der Fluideinlassanschluss sein. Bei Bedarf können ein oder mehrere weitere Fluidanschlüsse für zusätzliche Anschlusszwecke am Verteilergehäusekörper vorgesehen sein. Außerdem sind die Längsachsen der Fluidanschlüsse senkrecht zu der Längsachse des Verteilergehäusekörpers und axial entlang dieser parallel zueinander versetzt. Alternativ dazu ist es möglich, dass die jeweilige Längsachse jedes der drei Fluidanschlüsse senkrecht zur Längsachse des Verteilergehäusekörpers ist und die Längsachsen der drei Fluidanschlüsse in einer gemeinsamen Ebene liegen. Dies erlaubt eine besonders kleine Gesamttiefe des Verteilergehäusekörpers. Insbesondere können die drei Fluidanschlüsse in Umfangsrichtung gegeneinander z.B. jeweils um 120° versetzt an der Mantelfläche des zylinderförmigen Verteilergehäusekörpers angeordnet sein.

Wie die gezeigten und oben erläuterten Ausführungsformen deutlich machen, stellt die Erfindung eine vorteilhafte Brausenverteileranordnung zur Verfügung, die eine kleine Gesamttiefe ohne weit hervorstehendes Bedienelement bei hohem Bedienkomfort hat.

## Patentansprüche

1. Brausenverteileranordnung (1) mit
- einem zylinderförmigen Verteilergehäusekörper (4) mit einer von einer hinteren Stirnseite gebildeten Befestigungs-Rückseite (6), die für eine wandseitige Befestigung des Verteilergehäusekörpers eingerichtet ist, einer Bedien-Frontseite (12) und drei am Umfang (11) des zylinderförmigen Verteilergehäusekörpers angeordneten Fluidanschlüssen zwischen der Befestigungs-Rückseite und der Bedien-Frontseite, wobei die drei Fluidanschlüsse einen ersten und einen zweiten Fluidauslassanschluss (2, 3) zum Anschluss an eine jeweilige Brausezufuhrleitung (17, 18) und einen Fluideinlassanschluss (16) umfassen, und
- einem Umschaltventil (5), das zum wahlweisen Verbinden des Fluideinlassanschlusses mit dem ersten und/oder dem zweiten Fluidauslassanschluss dient und ein nutzerbetätigbares, an der Bedien-Frontseite angeordnetes Bedienelement (14) aufweist, das eine von vorn bedienbare Drucktaste ist,
- wobei ein Tiefenabstand (25) zwischen einer Bedienelement-Vorderseite (13) und einer Vorderseite (26) eines vordersten der drei Fluidanschlüsse (2, 3, 16) kleiner als 50 mm und/oder kleiner als ein Drittel einer Gesamttiefe (20) des Verteilergehäusekörpers (4) mit dem Umschaltventil (5) und/oder kleiner als ein kleinster Durchmesser (27) des Verteilergehäusekörpers senkrecht zu einer sich in Verbindungsrichtung zwischen Bedien-Frontseite und Befestigungs-Rückseite erstreckenden Längsachse (7) des Verteilergehäusekörpers und/oder kleiner als ein kleinster Durchmesser (28) der drei Fluidanschlüsse ist.

2. Brausenverteileranordnung nach Anspruch 1, weiter **dadurch gekennzeichnet, dass** der Tiefenabstand (25) kleiner als 40 mm, insbesondere kleiner als 30 mm, ist.

3. Brausenverteileranordnung nach Anspruch 1 oder 2, weiter **dadurch gekennzeichnet, dass** die Gesamttiefe (20) des Verteilergehäusekörpers (4) mit dem Umschaltventil (5) kleiner als 120 mm, insbesondere kleiner als 90 mm, und/oder kleiner als der vierfache kleinste Durchmesser (28) der drei Fluidanschlüsse (2, 3, 16) ist.

4. Brausenverteileranordnung nach einem der Ansprüche 1 bis 3, weiter **dadurch gekennzeichnet, dass** zwei der drei Fluidanschlüsse (2, 3, 16) am Umfang (11) des Verteilergehäusekörpers (4) in Umfangsrichtung gegeneinander um 180° versetzt angeordnet sind.

5. Brausenverteileranordnung nach einem der Ansprüche 1 bis 4, weiter **dadurch gekennzeichnet, dass** eine jeweilige Längsachse (29, 30, 31) jedes der drei Fluidanschlüsse (2, 3, 16) senkrecht zur Längsachse (7) des Verteilergehäusekörpers (4) ist und die Längsachsen der drei Fluidanschlüsse in einer gemeinsamen Ebene liegen.

## Claims

1. A shower distributor arrangement device (1), comprising
- a cylindric distributor housing body (4) with a fixation rear side (6) formed by a rear end face, which fixation rear side is configured for wall-sided fixation of the distributor housing body, an operator control front side (12) and three fluid connectors arranged on the circumference (11) of the cylindric distributor housing body between the fixation rear side and the operator control front side, wherein the three fluid connectors include a first and a second fluid outlet connector (2, 3) for connecting to a respective shower supply line (17, 18) and a fluid inlet connector (16), and
- a switch-over valve (5) intended for selectively connecting the fluid inlet connector to the first and/or the second fluid outlet connector and a user operable operator control element (14) disposed on the operator control front side, which operator control element is a push button actuatable from the front,
- wherein a depth distance (25) between an operator control element front side (13) and a front side (26) of a foremost one of the three fluid connectors (2, 3, 16) is less than 50 mm and/or less than one third of a total depth (20) of the distributor housing body (4) with the switch-over valve (5) and/or less than a smallest diameter (27) of the distributor housing body perpendicular to a longitudinal axis (7) of the distributor housing body extending in the connecting direction between operator control front side and fixation rear side and/or less than a smallest diameter (28) of the three fluid connectors.

2. The shower distributor arrangement device according to claim 1, further **characterized in that** the depth distance (25) is less than 40 mm, in particular less than 30 mm.

3. The shower distributor arrangement device according to claim 1 or 2, further **characterized in that** the total depth (20) of the distributor housing body (4) with the switch-over valve (5) is less than 120 mm, in particular less than 90 mm, and/or less than fourfold the smallest diameter (28) of the three fluid connectors (2, 3, 16).

4. The shower distributor arrangement device according to any one of the claims 1 to 3, further **characterized in that** two of the three fluid connectors (2, 3, 16) are arranged on the circumference (11) of the distributor housing body (4) circumferentially offset from each other by 180°.

5. The shower distributor arrangement device according to any one of the claims 1 to 4, further **characterized in that** a respective longitudinal axis (29, 30, 31) of each of the three fluid connectors (2, 3, 16) is perpendicular to the longitudinal axis (7) of the distributor housing body (4) and the longitudinal axes of the three fluid connectors are located in a common plane.

## Revendications

1. Ensemble distributeur pour douche (1) comportant
- un corps de boîtier de distributeur (4) de forme cylindrique ayant un côté arrière de fixation (6) formé par un côté d'extrémité arrière et adapté pour une fixation murale du corps de boîtier de distributeur, un côté avant de manipulation (12) et trois raccords de fluide disposés à la périphérie (11) du corps de boîtier de distributeur cylindrique entre le côté arrière de fixation et le côté avant de manipulation, les trois raccords de fluide comprenant un premier et un second raccord de sortie de fluide (2, 3) pour le raccordement à une conduite d'alimentation de douche respective (17, 18) et un raccord d'entrée de fluide (16), et
- une vanne de commutation (5) qui sert à connecter sélectivement ledit raccord d'entrée de fluide audit premier et/ou second raccord de sortie de fluide et qui comporte un élément de manipulation (14) actionnable par l'utilisateur et disposé sur le côté avant de manipulation, qui est un bouton poussoir susceptible d'être actionné par l'avant,
dans lequel
- une distance en profondeur (25) entre un côté avant d'élément de manipulation (13) et un côté avant (26) du raccord situé le plus en avant parmi les trois raccords de fluide (2, 3, 16) est inférieure à 50 mm et/ou inférieure à un tiers d'une profondeur totale (20) du corps de boîtier de distributeur (4) ayant la vanne de commutation (5), et/ou inférieure à un diamètre minimal (27) du corps de boîtier de distributeur perpendiculairement à un axe longitudinal (7) du corps de boîtier de distributeur s'étendant dans la direction de connexion entre le côté avant de manipulation et le côté arrière de fixation, et/ou inférieure à un diamètre minimal (28) des trois raccords de fluide.

2. Ensemble distributeur pour douche selon la revendication 1,
**caractérisé en outre en ce que**
la distance en profondeur (25) est inférieure à 40 mm, en particulier inférieure à 30 mm.

3. Ensemble distributeur pour douche selon la revendication 1 ou 2,
**caractérisé en outre en ce que**
la profondeur totale (20) du corps de boîtier de distributeur (4) ayant la vanne de commutation (5) est inférieure à 120 mm, en particulier inférieure à 90 mm et/ou inférieure à quatre fois le diamètre minimal (28) des trois raccords de fluide (2, 3, 16).

4. Ensemble distributeur pour douche selon l'une des revendications 1 à 3,
**caractérisé en outre en ce que**
deux parmi les trois raccords de fluide (2, 3, 16) sont disposés à la périphérie (11) du corps de boîtier de distributeur (4) en étant décalés l'un de l'autre de 180° en direction périphérique.

5. Ensemble distributeur pour douche selon l'une des revendications 1 à 4,
**caractérisé en outre en ce que**
un axe longitudinal respectif (29, 30, 31) de chacun des trois raccords de fluide (2, 3, 16) se situe perpendiculairement à l'axe longitudinal (7) du corps de boîtier de distributeur (4), et les axes longitudinaux des trois raccords de fluide se situent dans un plan commun.
